# EUROPEAN PATENT APPLICATION

(11) **EP 4 440 202 A1**
(43) Date of publication of application: **02.10.2024**
(21) Application number: 22897510.8
(22) Date of filing: 25.10.2022
(51) Int. Cl.: H04W 52/02

(54) **ENERGY-SAVING CONTROL METHOD AND DEVICE, STORAGE MEDIUM, AND PROGRAM PRODUCT**

(30) Priority: 26.11.2021 CN 202111424677
(71) Applicant: ZTE Corporation, Shenzhen Guangdong 518057 (CN)
(72) Inventor: YU, Susheng, Shenzhen, Guangdong 518057 (CN); ZHAO, Zhiyong, Shenzhen, Guangdong 518057 (CN); TIAN, Zhiji, Shenzhen, Guangdong 518057 (CN)
(74) Representative: WBH Wachenhausen Patentanwälte PartG mbB
(86) International application number: PCT/CN2022/127446
(87) International publication number: WO 2023/093427

(57) **Abstract**

The present application discloses an energy-saving control method and device, a storage medium, and a program product. The energy-saving control method is applied to the energy-saving control device. The energy-saving control method comprises: acquiring network data state information (S710); performing energy-saving decision processing according to the network data state information and a preset energy-saving policy to obtain an energy-saving control instruction (S720); and adjusting the operation mode of an active antenna unit (AAU) by using the energy-saving control instruction (S730).

## Description

### CROSS-REFERENCE TO RELATED APPLICATION

This application is filed on the basis of the Chinese patent application No. 202111424677.4 filed November 26, 2021, and claims priority of the Chinese patent application, the entire contents of which are incorporated herein by reference.

### TECHNICAL FIELD

The present disclosure relates to the field of telecommunication, and in particular to a method for controlling energy-saving, a device, a storage medium, and a program product.

### BACKGROUND

Massive multiple input and multiple output (Massive MIMO) base station systems generally include a Base Band Unit (BBU), a Massive Multiple Input, Multiple Output (MIMO) Active Antenna Unit (AAU), and the corresponding base station network management system. In particular, AAU is Massive MIMO equipment, which is the dominant product form for 5G New Radio (NR) networking. Compared with the traditional 4G Long Term Evolution (LTE) 8T8R (i.e., 8 transmitter links and 8 receiver links) RF Remote Radio Unit (RRU) equipment, AAU equipment consumes quite a bit more energy than RRU equipment. Hence, the energy demand of a site with the AAU equipment is also higher than that of a site with the RRU equipment. In addition, the bandwidth requirements of the 5G NR equipment are also several times larger than those of the LTE 4G equipment. The high energy consumption of equipment means that the equipment consumes a lot of electricity during operation. The electricity fee is higher for network operations of the site, and the actual operating cost of customers is higher. The higher operating cost somehow limits the willingness of clients to build new sites with AAU, which in turn restricts the development of 5G NR networks and telecommunications industry.

In the related technologies, there is provided two commonly used AAU operation energy-saving technologies, one of which is to shut down the equipment regularly, and the other one is to shut down some of channels regularly. For the former, since the 4G network base station and the 5G network base station are co-located, and share the power supply, the transformation of the power supply needs a lot of coordination work and is not easy to advance. For the latter, it is a rank reduction strategy for network equipment to shut down some channels regularly to save energy, this strategy is ineffective to deal with the sudden traffic burst demand in the corresponding network during the energy-saving period.

### SUMMARY

The following is a summary of the subject matter described herein. This summary is not intended to limit the scope of protection of the claims.

Provided are a method for controlling energy-saving, a device, a storage medium, and a program product in some embodiments of the present disclosure.

According to an embodiment, a method for controlling energy-saving is provided. The method is applied to a device for controlling energy-saving. The method includes: acquiring network data status information; performing energy-saving decision processing according to the network data status information and a preset energy-saving strategy, to acquire an energy-saving control instruction; and adjusting an operating mode of an active antenna unit (AAU) by means of the energy-saving control instruction.

According to an embodiment, a device for controlling energy-saving is provided. The device includes: a data acquisition unit and an energy-saving decision unit. The data acquisition unit is configured to acquire network data status information. The energy-saving decision unit is configured to perform energy-saving decision processing according to the network data status information and a preset energy-saving strategy to obtain an energy-saving control instruction, and to employ the energy-saving control instruction to adjust an operating mode of an Active Antenna Unit (AAU). The data acquisition unit is arranged within one of a network management system, a Base Band Unit (BBU), or the AAU. And the energy-saving decision unit is arranged in one of the network management system, the BBU or the AAU.

According to an embodiment of the present disclosure, a device for controlling energy-saving is provided. The device includes a memory, a processor and a computer program stored in the memory and executable by the processor which, when executed by the processor, causes the processor to carry out the method as described above.

According to an embodiment of the present disclosure, a computer-readable storage medium is provided. The computer-readable storage medium stores a computer-executable instruction which, when executed by a processor, causes the processor to carry out the method as described above.

According to an embodiment of the present disclosure, a computer program product is provided. The computer program product includes a computer program, or a computer instruction stored in a computer-readable storage medium which, when executed by a processor of a computer device, causes the computer device to carry out the method as described above.

Other features and advantages of the present disclosure will be illustrated in the following description, and in part will be apparent from the description, or may be understood by practicing the present disclosure. The objects and other advantages of the present disclosure can be achieved and obtained by the structure particularly set forth in the description, claims and drawings.

### BRIEF DESCRIPTION OF DRAWINGS

The drawings are intended to provide a further understanding of the technical scheme of the present disclosure, and constitute a part of the specification, and they are intended to illustrate the technical scheme of the present disclosure in conjunction with the embodiments of the present disclosure, but are not intended to limit the technical scheme of the present disclosure.
FIG. 1 depicts a schematic diagram showing an architecture of a base station in which a method for controlling energy-saving according to an embodiment of the present disclosure is carried out;
FIG. 2 depicts a schematic diagram showing an AAU according to an embodiment of the present disclosure;
FIG. 3 depicts a schematic diagram showing an AI based energy-saving apparatus according to an embodiment of the present disclosure;
FIG. 4 depicts a schematic diagram showing the interface of energy-saving control signals in a channel control circuit module according to an embodiment of the present disclosure;
FIG. 5 depicts a schematic diagram showing a channel controllable link module according to an embodiment of the present disclosure;
FIG. 6 depicts a schematic diagram showing a channel controllable basic link module 300 according to an embodiment of the present disclosure;
FIG. 7 depicts a flowchart showing a method for controlling energy-saving according to an embodiment of the present disclosure;
FIG. 8 depicts a flowchart showing an implementation of operation S720 illustrated in FIG. 7;
FIG. 9 depicts a flowchart showing another implementation of operation S720 illustrated in FIG. 7;
FIG. 10 depicts a flowchart showing an implementation of operation S810 illustrated in FIG. 8;
FIG. 11 depicts a flowchart showing another implementation of operation S810 illustrated in FIG. 8;
FIG. 12 depicts a flowchart showing yet another implementation of operation S810 illustrated in FIG. 8;
FIG. 13 depicts a flowchart showing yet another implementation of operation S810 illustrated in FIG. 8;
FIG. 14 depicts a flowchart showing yet another implementation of operation S810 illustrated in FIG. 8;
FIG. 15 depicts a schematic diagram showing a device for controlling energy-saving according to an embodiment of the present disclosure;
FIG. 16 is a schematic diagram showing a device for controlling energy-saving according to an embodiment of the present disclosure;
FIG. 17 is a schematic diagram showing a device for controlling energy-saving according to an embodiment of the present disclosure; and
FIG. 18 depicts a schematic diagram showing another device for controlling energy-saving according to an embodiment of the present disclosure.

### DETAILED DESCRIPTION

The purpose, technical scheme and advantages of the present disclosure will become apparent through the following description for various embodiments in conjunction with the drawings. It should be understood that the embodiments described here are intended for illustration but not limitation of the present disclosure.

It shall be noted that, in some cases, the operations shown or described may be performed in a different order than the logical order shown in the flowcharts. It should be understood that in the description, the claims and the description of the drawings, the term a plurality (or plurality) means more than two; greater than, less than, more than, etc. shall be understood to exclude the number being referred to; and above, below, within, etc. shall be understood to include the number being referred to.

Provided are a method for controlling energy-saving, a device, a storage medium, and a program product in some embodiments of the present disclosure. According to an embodiment, a method is provided. The method includes, acquiring network data status information, performing energy-saving decision processing according to the network data status information and the preset energy-saving strategy to acquire an energy-saving control instruction; and adjusting the operation mode of AAU by means of the energy-saving control instruction. That is, in contrast to the energy-saving mode in which the power supply is turned off regularly, and some channels are shut down regularly for energy-saving in the related art, according to an embodiment of the present disclosure, the energy-saving control instruction adapted to the current situation is acquired based on the currently acquired network data status information, such that the operating mode of the AAU can be adjusted according to the currently acquired network data status information for energy-saving. Therefore, the scheme according to an embodiment of the present disclosure can flexibly implement energy-saving control on AAU according to practical application requirements without adding new hardware equipment, in order to reduce equipment operation energy consumption, and reduce the impact on service experience.

Some embodiments of the present disclosure will be further illustrated with reference to the drawings.

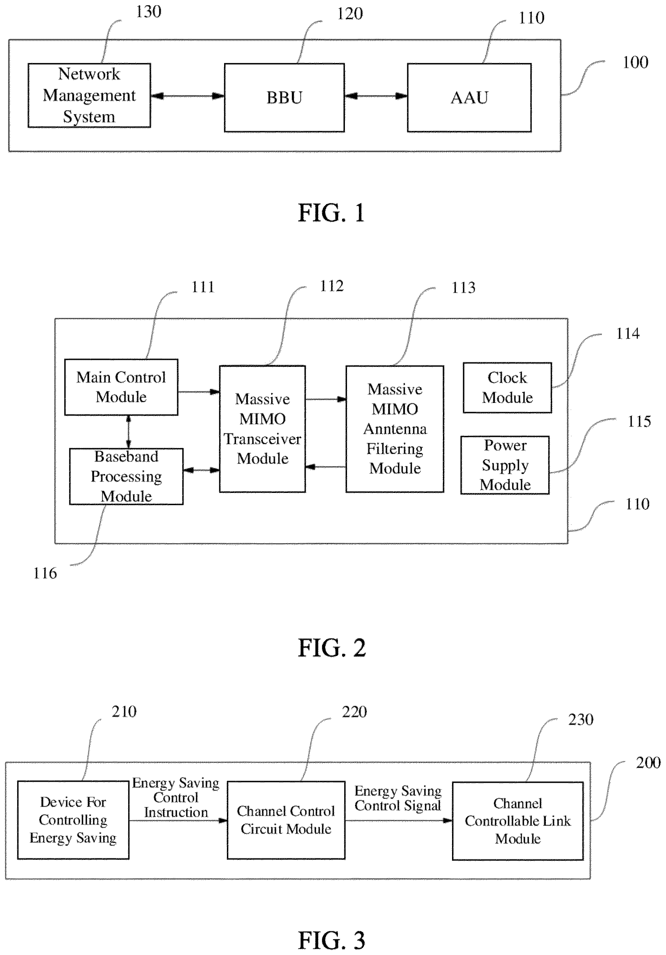

FIG. 1 depicts a schematic diagram showing an architecture of a base station in which a method for controlling energy-saving according to an embodiment of the present disclosure is carried out. As shown in FIG. 1, the base station 100 includes a BBU 120, an AAU 110, and a network management system 130. The BBU 120 is arranged between the network management system 130 and the AAU 110, and the BBU 120 is communicatively connected with the network management system 130 and the AAU 110, respectively.

In an embodiment, BBU 120 receives the network management control signaling sent by the network management system 130. Upon receiving the network management control signaling, BBU120 sends a downlink baseband signal to AAU 110, to instruct AAU 110 to process the received downlink baseband signal, and to transmit the processed downlink baseband signal to the air interface. Additionally, or alternatively, AAU110 can also receive an uplink wireless signal over the air interface, process the uplink wireless signal, and then transmit the processed uplink wireless signal to BBU 120.

It should be noted that the network management system 130 can configure the BBU 120 and AAU 110, and realize the management and control of service performance. The BBU 120 and the AAU 110 may be connected through an enhanced Common Public Radio Interface (eCPRI).

It should be noted that the Common Public Radio Interface (CPRI) is a crucial communication interface specification between the radio equipment control center and the radio equipment in the cellular wireless network, which is widely employed in global mobile communication systems, third-generation wireless communication technologies, LTE, and 5G base station systems. The eCPRI protocol is an evolution of the CPRI protocol, which is carried on the Ethernet. ECPRI protocol is an interface protocol, through which a data transmitting channel between BBU 120 and AAU 110 is established. The data transmitted over the channel includes control plane data, user plane data, and synchronization plane data.

It should also be noted that AAU 110 is a device that integrates RRU and antenna, while BBU 120 is generally the network interface unit and baseband processing unit of base station 100. AAU 110 can communicate with BBU 120 through an optical fiber channel and realize the transmission of uplink and downlink baseband signals with BBU 120.

FIG. 2 depicts a schematic diagram showing an architecture of an AAU according to an embodiment of the present disclosure. As shown in FIG. 2, AAU 110 includes a baseband processing module 116, a main control module 111, a Massive Multiple Input Multiple Output (Massive MIMO) transceiver module 112, a MIMO antenna filtering module 113, a clock module 114, and a power supply module 115. The main control module 111 is connected with the Massive MIMO transceiver module 112 and the baseband processing module 116. The Massive MIMO antenna filtering module 113 is connected with the Massive MIMO transceiver module 112. The baseband processing module 116 is connected with the BBU 120.

It should be noted that the power supply module 115 is configured to supply power to each component within the AAU 110. The clock module 114 is configured to provide clock signals for each component within the AAU 110.

In an embodiment, AAU 110 receives the downlink baseband signal sent by BBU 120, and performs signal processing to the downlink signal, such as digital intermediate frequency (IF) processing, digital-to-analog conversion (DAC) processing, frequency conversion processing, small signal processing, power amplification processing, filtering processing, or the like, by means of the modules of the AAU 110, such as the digital IF transceiver module, the RF channel link module, array antenna module, and transmits the processed signal to the air interface through array antenna module as a downlink radio signal. AAU 110 utilizes its own array antenna module to receive uplink wireless signals from the air interface, and utilizes its own modules, such as RF channel link modules, and digital IF receivers, to achieve filtering, amplification, frequency switching, and digital IF reception of uplink wireless signals, and generates and transmits uplink wireless signals to BBU 120.

Based on the base station 100 shown in FIG. 1, an Artificial Intelligence (AI) based energy-saving device 200 is provided according to an embodiment of the present disclosure. As shown in FIG. 3, the AI-based energy-saving apparatus 200 includes a device 210 for controlling energy-saving, a channel control circuit module 220, and a channel controllable link module 230. The channel control circuit module 220 is communicatively connected with the device for controlling energy-saving 210 and the channel controllable link module 230, respectively.

The device for controlling energy-saving 210 is configured to acquire network data status information and perform energy-saving decision processing according to the network data status information and a preset energy-saving strategy to obtain an energy-saving control instruction, and send the energy-saving control instruction to the channel control circuit module 220.The channel control circuit module 220 is configured to receive the energy-saving control instruction from the device 210 for controlling energy-saving, generate a corresponding energy-saving control signal according to the energy-saving control instruction, and then send the energy-saving control signal to the channel controllable link module 230. It should be noted that the channel control circuit module 220 receives the energy-saving control instruction, and then generates and outputs a corresponding energy-saving control signal according to the energy-saving control instruction, which may be a channel off signal, a channel on signal, a channel optimizing signal, a channel wake-up signal, or a channel sleep signal. It should be noted that a channel includes a transmitting channel, a receiving channel, a digital IF channel, or the like. A channel off signal includes a transmitting channel off signal or a receiving channel off signal. A channel-optimizing signal includes a transmitting channel-optimizing signal, and a receiving channel-optimizing signal. A channel sleep signal includes a digital IF channel sleep signal, and a digital IF channel wake-up signal, or the like, and the present disclosure is not limited thereto.

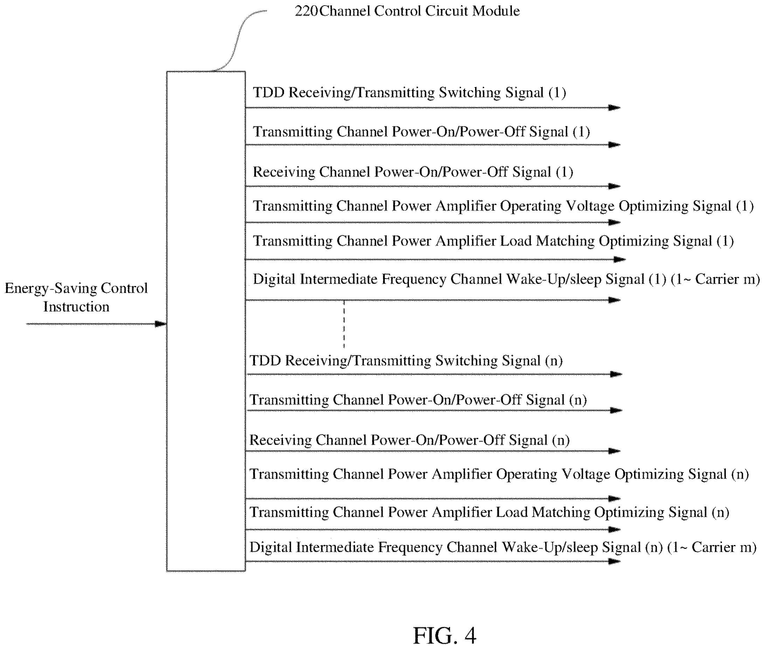

Referring to FIG. 4, after receiving the channel control instruction, the channel control circuit module outputs a signal corresponding to the channel control instruction, such as a Time Division Duplex (TDD) receiving/transmitting switching signal (1), a transmitting channel power-on/power-off signal (1), a receiving channel power-on/power-off signal (1), a transmitting channel power amplifier operating voltage optimizing signal (1), a transmitting channel power amplifier load matching optimizing signal (1), a digital IF channel wake-up/sleep signal (1) (1~ carrier m) or a TDD receiving/transmitting switching signal (n), transmitting channel power-on/power-off signal (n), receiving channel power-on/power-off signal (n), transmitting channel power amplifier operating voltage optimizing signal (n), transmitting channel power amplifier load matching optimizing signal (n), digital IF channel wake-up/sleep signal (n) (1~ carrier m), etc. Both n and m can represent any positive integer. Digital IF channel wake-up/sleep signal (n) (1~ carrier m) indicates that the digital channel wake-up/sleep signals are controlled individually according to the number of carriers, and 1-carrier m indicates the number of carriers. It should also be noted that for nTnR (that is, n transmitting links and n receiving links) multi-channels, each type of signals is grouped into N groups, and the digital channel wake-up/sleep signal can also be controlled independently according to the carrier.

The channel controllable link module 230 is configured to receive the energy-saving control signal from the channel control circuit module 220, and adjust the operating mode of the AAU 110 according to the energy-saving control signal.

It should be noted that different components in the device 210 for controlling energy-saving can be distributed in any one or more of the network management system 130, BBU 120, or AAU 110, and which is not specifically limited here.

It should be noted that, in an implementation, the energy-saving control instruction includes a channel off instruction, a channel sleep instruction, a channel optimizing instruction, or the like. The channel includes a transmitting channel, a receiving channel, a digital IF channel, or the like. The channel-off instruction includes a transmitting channel off instruction and a receiving channel off instruction, or the like. The channel optimizing instruction includes a transmitting channel optimizing instruction and a receiving channel optimizing instruction, or the like. The channel sleep instruction includes a digital IF channel sleep instruction, or the like. The present disclosure is not limited thereto.

It should be noted that the device 210 for controlling energy-saving can communicate with relevant interactive units in the Massive MIMO system environment. In an implementation, the device for controlling energy-saving can acquire the network data status information sent by the AAU in the Massive MIMO system, process the network data status information to obtain a corresponding energy-saving control instruction, and then send the energy-saving control instruction to the AAU, such that the AAU adjust its operating mode accordingly.

It should also be noted that the device 210 for controlling energy-saving, the channel control circuit module 220 and the channel controllable link module 230 in the AI-based energy-saving apparatus 200 can be flexibly added, eliminated, or adjusted according to practical application requirements, to adapt to the diversity of AI-based energy-saving requirements of AAU 110 of Massive MIMO base station 100 in wireless communication systems. As such, effective energy saving is achieved and the adverse impact on service experience is reduced.

In an embodiment, when the energy-saving control instruction is the channel off instruction, the channel control circuit module 220 receives the channel off instruction from the device 210 for controlling energy-saving, generates the corresponding channel off signal according to the energy-saving control instruction, and then sends the channel off signal to a channel of the channel controllable link module 230. The channel controllable link module 230 receives the channel-off signal from the channel control circuit module 220, and then adjusts the channel-off mode of the AAU 110 according to the channel-off signal. As such, the power-on operating and power-off energy-saving for both the transmitting channel and the receiving channel are achieved. The AI-based power-off energy-saving of the channels based on the service mode is achieved, and the effective utilization of power consumption is achieved on demand quickly. It should be noted that a channel-off mode includes a transmitting channel-off mode, and a receiving channel-off mode.

In an embodiment, when the energy-saving control instruction is a channel optimizing instruction, the channel control circuit module 220 receives the channel optimizing instruction from the device 210 for controlling energy-saving, generates a corresponding channel optimizing signal and a channel optimizing target value according to the energy-saving control instruction, and then sends the channel optimizing signal and the channel optimizing target value to the channel controllable link module 230. The channel controllable link module 230 receives the channel optimizing signal and the channel optimizing target value from the channel control circuit module 220, and then adjusts the operating mode of the AAU 110 according to the channel optimizing signal and the channel optimizing target value. It should be noted that the operating status parameters of the channel that can be optimized, include one or more parameters such as the drain voltage and gate voltage of the power amplifier and the output matching status of the final power amplifier, and the present disclosure is not limited thereto. When the drain voltage/gate voltage of the power amplifier is optimized according to the channel optimizing instruction, the dynamic efficiency of the power amplifier can be improved, and the dynamic power consumption can be reduced. When the output matching state of the final power amplifier is optimized according to the channel optimizing instruction, the output power reflection loss can be reduced, and the power transmission efficiency can be improved. In addition, the power amplifier can be deactivated by adjusting the gate voltage of the power amplifier to the extreme value, such that, the power consumption of the power amplifier is the minimum. In a word, by optimizing the relevant operating parameters of power devices such as power amplifiers on the channel, the operating efficiency of the channel is better at the current power and frequency, thus realizing energy saving.

In an embodiment, when the energy-saving control instruction is a digital IF channel sleep instruction, the channel control circuit module 220 receives the digital IF channel sleep instruction from the device 210 for controlling energy-saving, generates a corresponding digital IF channel sleep signal according to the energy-saving control instruction, and then sends the digital IF channel sleep signal to the channel controllable link module 230. The channel controllable link module 230 receives the digital IF channel sleep signal from the channel control circuit module 220, and then adjusts the digital IF channel sleep mode of the AAU 110 according to the digital IF channel sleep signal, to enable the channel core digital logic module to sleep, so as to realize the effective utilization of power consumption as needed quickly.

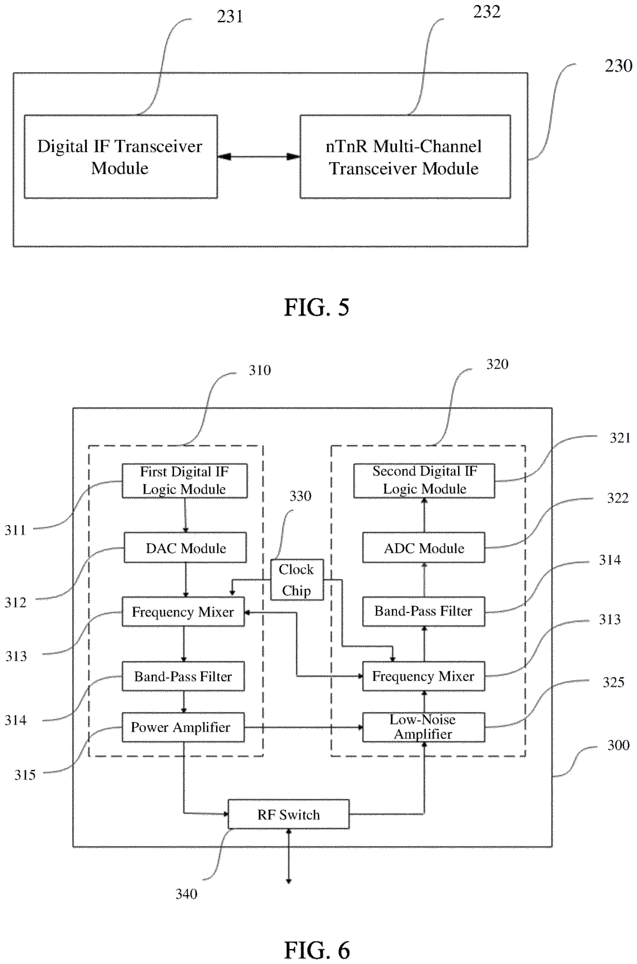

FIG. 5 depicts a schematic diagram showing a channel controllable link module 230 according to an embodiment, based on the AI-based energy-saving apparatus 200 shown in FIG. 3. The channel controllable link module 230 includes a digital IF transceiver module 231 and an nTnR multi-channel transceiver module 232 connected with each other by a logical chain.

It should be noted that the digital IF transceiver module 231 includes a first digital IF logic module 311 and a second digital IF logic module 321. The nTnR multi-channel transceiver module 232 includes a TRX transceiver link module, a TRX2 transceiver link module, a TRXn transceiver link module, etc., where n is a positive integer. In an embodiment, the first digital IF logic module may include a Discrete Fast Fourier Transform (DFFT) unit, a Digital Up Converter (DUC), a Crest Factor Reduction (CFR) unit, and a Digital Pre-Distortion (DPD) unit. The second digital IF logic module may include a Discrete Fast Fourier Transform (DFFT) unit and a Digital Down Converter (DDC).

In an embodiment, each of the TRX transceiver link module, TRX2 transceiver link module, and the TRXn transceiver link module includes a digital-to-analog converter module 312, a band-pass filter 314, a power amplifier 315, an analog-to-digital converter (ADC) module 322 and a low-noise amplifier 325.

FIG. 6 depicts a schematic diagram showing a channel controllable basic link module 300 according to an embodiment, based on the channel controllable link module 230 shown in FIG. 5. The channel controllable basic link module 300 includes a channel controllable basic transmission link 310, a channel controllable basic receiving link 320, and a clock chip 330.

It should be noted that the clock chip 330 is configured to provide clock signals for various components within the AAU 110.

In an embodiment, the channel controllable basic transmission link 310 includes a first digital IF logic module 311, a digital-to-analog converter module 312, a frequency mixer 313, a band-pass filter 314, a power amplifier 315, a radio frequency switch 340, etc. The digital-to-analog converter module 312 is connected with the first digital IF logic module 311 and the frequency mixer 313 through a logic chain. The band-pass filter 314 is respectively connected with the power amplifier 315 and the frequency mixer 313 through a logic chain. The power amplifier 315 is connected with the radio frequency switch 340. The channel controllable basic receiving link 320 includes a second digital IF logic module 321, an analog-to-digital converter module 322, a frequency mixer 313, a band-pass filter 314, a low-noise amplifier 325, and a radio frequency switch 340, etc. The analog-to-digital converter module 322 is connected with the second digital IF logic module 321 and the band-pass filter 314 through a logic chain respectively. The frequency mixer 313 is connected with the low-noise amplifier 325 and band-pass filter 314 through a logic chain respectively. The low-noise amplifier 325 is connected with the radio frequency switch 340.

For the channel controllable basic transmission link 310, the digital signal passes through the first digital IF logic module 311 and is processed in the first digital IF logic module 311 to obtain a digital IF signal. The digital IF signal is converted into an analog IF signal through the digital-to-analog converter module 312, then passes through the frequency mixer 313 to obtain an analog radio frequency signal. The analog RF signal then passes through the band-pass filter 314 for filtering, then passes through the power amplifier 315 for power amplification, and is sent out through the radio frequency switch 340 finally. For the channel controllable basic receiving link 320, an analog RF signal is first received through the RF switch 340. The signal is subjected to noise reduction processing by the low-noise amplifier 325, and then passes through the frequency mixer 313 to obtain an analog IF signal. The analog IF signal then passes through the band-pass filter 314 to filter out the noise therein, and then passes through the analog-to-digital converter module 322 to convert the analog IF signal into a digital IF signal, and finally passes through the second digital IF logic module 321 to perform digital IF processing.

The base station and application scenarios described in an embodiment of the present disclosure are intended for a better understanding of rather than limitations to the technical scheme of various embodiments of the present disclosure. It is known to those having ordinary skills in the art that, with the evolution of the base station and the emergence of new application scenarios, the technical scheme provided by the embodiment of the present disclosure is also applicable to similar technical problems.

It can be understood by those having ordinary skills in the art that the base station 100 shown in FIG. 1, the AAU 110 shown in FIG. 2, and the AI-based energy-saving apparatus 200 shown in FIG. 3, the channel controllable link module 230 shown in FIG. 5, and the channel controllable basic link module 300 shown in FIG. 6 do not constitute a limitation to the embodiments of the present disclosure, and may include more or fewer components than those shown, or some components may be combined, or have different arrangements of components.

Based on the base station 100, several embodiments of the method for controlling energy-saving are illustrated below.

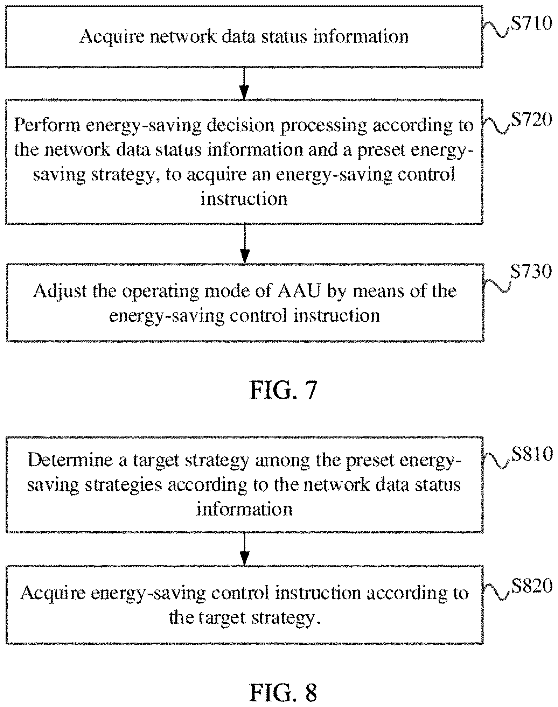

FIG. 7 depicts a flowchart showing a method for controlling energy-saving according to an embodiment of the present disclosure. The method can be applied to a device for controlling energy-saving, such as the device 210 for controlling energy-saving in the AI-based energy-saving apparatus 200 shown in FIG. 3. The method may include, but is not limited to, operations S710, S720, and S730.

At operation S710, network data status information is acquired.

In this operation, the device for controlling energy-saving can obtain the network data status information in real time. The network data status information can include the historical data traffic information of the sector where AAU is located, the data traffic information of the sector where AAU is located, the operating frequency information of AAU, the data transmission demand information, and other network data status information.

It should be noted that the network data status information can be obtained with various implementations. For example, the network data status information can be obtained through the network management system, or can be obtained through AAU, and the present disclosure is not limited thereto.

At operation S720, energy-saving decision processing is performed according to the network data status information and a preset energy-saving strategy, to acquire an energy-saving control instruction.

In this operation, energy-saving decision processing can be performed according to the obtained network data status information and the preset energy-saving strategy in the previous operation S710. Hence, an energy-saving control instruction can be acquired, such that the operating mode of AAU can be adjusted by means of the energy-saving control instruction in the subsequent operations.

It should be noted that the preset energy-saving strategy can be a table made according to the historical network data status information. For example, a preset energy-saving strategy includes table name, field identification, and index value. In addition, the preset energy-saving strategy can be updated, and the present disclosure is not limited thereto.

At operation S730, the operating mode of AAU is adjusted by means of the energy-saving control instruction.

In this operation, since the operating mode of AAU can be adjusted by means of the energy-saving control instruction obtained in the previous operation S720, the operating mode of AAU can be flexibly adjusted according to the practical application requirements to adapt to the diversity of energy-saving requirements and effectively save energy.

In this embodiment, according to the operations S710 to S730 described above, after the network data status information is acquired, energy-saving decision processing is performed according to the network data status information and the preset energy-saving strategy to acquire an energy-saving control instruction. Then the operating mode of the AAU is adjusted by means of the energy-saving control instruction. That is, in contrast to the energy-saving mode in which the power supply is turned off regularly, and some channels are shut down regularly for energy-saving in the related art, according to an embodiment of the present disclosure, the energy-saving control instruction adapted to the current situation is acquired based on the currently acquired network data status information, such that the operating mode of the AAU can be adjusted according to the currently acquired network data status information for energy-saving. Therefore, the scheme according to an embodiment of the present disclosure can flexibly implement energy-saving control on AAU according to practical application requirements without adding new hardware equipment, in order to adapt to the diversity of energy-saving needs for effective energy-saving, and reduce equipment operation energy consumption, and reduce the impact on service experience.

In an embodiment, the operation mode of the AAU includes channel off mode, digital IF channel sleep mode, operating voltage optimizing mode of the channel power amplifier, and load matching optimizing mode of the channel power amplifier.

In an embodiment, as shown in FIG. 8, operation S720 includes but is not limited to operation S810 and operation S820.

At operation S810, a target strategy is determined among the preset energy-saving strategies according to the network data status information.

In this operation, when the device for controlling energy-saving performs energy-saving decision processing according to the network data status information and the preset energy-saving strategies, and obtains the energy-saving control instruction, the device for controlling energy-saving can first determine the target strategy among the preset energy-saving strategies according to the network data status information, and acquire the energy-saving control instruction according to the target strategy.

It should be noted that the network data status information may include the time when the network data status information was generated, the carrier carrying the network data status information, and other information, which are not exhausted here.

At operation S820, an energy-saving control instruction is acquired according to the target strategy.

In this operation, the energy-saving control instruction can be obtained according to the target strategy obtained in the previous operation S810. In this way, adjustment can be performed on the operating mode of the AAU by means of the energy-saving control instruction in the subsequent operations.

In this embodiment, according to the operations S810 and S820 as described above, the device for controlling energy-saving can determine the target strategy among the preset energy-saving strategies according to the network data status information, and then obtain the energy-saving control instruction according to the target strategy. As such, in the subsequent operations, adjustment can be performed on the operating mode of the AAU according to the control instruction, so as to adapt to the diversity of AI-based energy-saving requirements of the AAU.

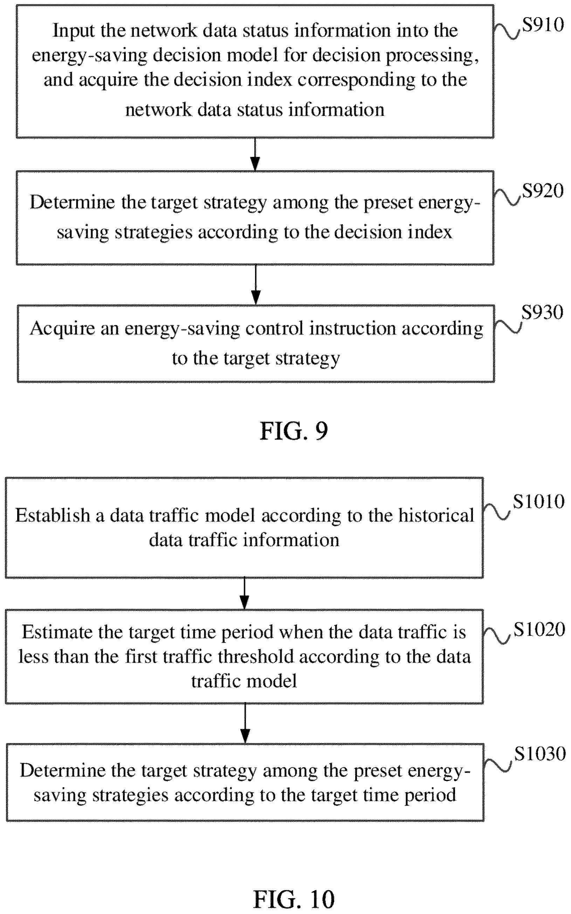

In an embodiment, as shown in FIG. 9, operation S720 includes but is not limited to operations S910, S920, and S930.

At operation S910, the network data status information is input into the energy-saving decision model for decision processing, and the decision index corresponding to the network data status information is acquired.

In this operation, when the device for controlling energy-saving performs energy-saving decision processing according to the network data status information and the preset energy-saving strategy to obtain an energy-saving control instruction, the device for controlling energy-saving can first input the network data status information into the energy-saving decision model for decision processing to obtain a decision index corresponding to the network data status information.

It should be noted that the energy-saving decision model can be a data traffic model or other energy-saving decision models, and the present disclosure is not limited thereto.

At operation S920, the target strategy is determined among the preset energy-saving strategies according to the decision index.

In this operation, after the decision index is obtained in the previous operation S910, the device for controlling energy-saving can determine the target strategy among the preset energy-saving strategies according to the decision index. As such, in the subsequent operations, the energy-saving control instruction can be acquired according to the target strategy.

At operation S930, an energy-saving control instruction is acquired according to the target strategy.

In this operation, the energy-saving control instruction can be obtained according to the target strategy obtained in the previous operation S920. In this way, adjustment can be performed on the operating mode of the AAU by means of the energy-saving control instruction in the subsequent operations.

In this embodiment, according to the operations S910 to S930 as described above, the device for controlling energy-saving first inputs the network data status information into the energy-saving decision model for decision processing and acquires the decision index corresponding to the network data status information. Then, the device for controlling energy-saving determines the target strategy among the preset energy-saving strategies according to the decision index, and then obtains the energy-saving control instruction according to the target strategy. As such, in the subsequent operations, adjustment can be performed on the operating mode of the AAU according to the control instruction, so as to adapt to the diversity of AI-based energy-saving requirements of the AAU.

It should be noted that this embodiment is an extended scheme for determination by means of an AI-based model. In an example, the network data status information indicates the traffic of the sector where the AAU is located. The traffic of the sector is input into the energy-saving decision model to obtain a decision index corresponding to the traffic of the sector. The decision index indicates traffic of the sector is less than two-thirds of the full capacity of AAU. Then the target strategy is determined among the preset energy-saving strategies according to the periodic period. The target strategy is to turn off the channel in the period during which the traffic of the sector is less than two-thirds of the full capacity of AAU.

In an embodiment, as shown in FIG. 10, in the case where the network data status information includes historical data traffic information, operation S810 includes but is not limited to operations S1010, S1020, and S 1030.

At operation S1010, a data traffic model is established according to the historical data traffic information.

In this operation, the network data status information includes historical data traffic information, and when the target strategy is to be determined, a data traffic model can be established according to the historical data traffic information. As such, the target time period during which the data traffic is less than the first traffic threshold can be determined by means of the data traffic model in the subsequent operations, which is beneficial to quickly obtaining the target strategy and improving the accuracy of the target strategy.

It should be noted that the historical data traffic information can be the data traffic information of the previous year prior to the current time, the data traffic information of the previous month prior to the current time, or the data traffic information of any other period prior to the current time, which is not specifically limited here. In an example, the current date is August 1, 2021. The historical data traffic information can be the data traffic during the period from July 1, 2021 to July 31, 2021. In another example, the current date is August 1st, 2021, and the historical data traffic information can be the daily data traffic from August 1st, 2020 to July 31st, 2021.

It should also be noted that the data traffic model can include time information, data traffic information and other information, and the present disclosure is not limited thereto.

At operation S1020, the target time period when the data traffic is less than the first traffic threshold is estimated according to the data traffic model.

In this operation, the target time period during which the data traffic is less than the first traffic threshold can be estimated according to the data traffic model obtained in the previous operation S1010. As such the target strategy can be determined among the preset energy-saving strategies by means of the target time period in subsequent operations. The data traffic can be dynamically identified in this target time period to a great extent.

It should be noted that the target time period may be a periodic target time period, such as a short-term periodic target time period, or a long-term periodic target time period, and the present disclosure is not limited thereto. In an example, the current date is August 1, 2021, and the historical data traffic information is the statistical information about the data traffic during the period from July 24, 2021 to July 31, 2021. Then the target time period estimated by the data traffic model can be the target time period in every day. In another example, the current date is August 1, 2021, and the historical data traffic information is the data traffic during the period from July 31, 2020 to July 31, 2021. Then the target time period estimated by the data traffic model can be the target time period in each month, and the present disclosure is not limited thereto.

In an embodiment, the first traffic threshold is half of the full capacity of AAU or other traffic values, which can be set according to the practical demand and is not specifically limited here.

At operation S1030, the target strategy is determined among the preset energy-saving strategies according to the target time period.

In this operation, the target strategy can be determined in the preset energy-saving strategies according to the target time period during which the data traffic is less than the first traffic threshold estimated in the previous operation S1020. As such, in the subsequent operations, the energy-saving control instruction is acquired according to the target strategy. In this operation, the data traffic can be dynamically identified, and the target strategy can be dynamically adjusted, thereby reducing power consumption and achieving the energy-saving effect.

In this embodiment, according to the operations S1010 to S1030 as described above, the device for controlling energy-saving can first establish a data traffic model according to the historical data traffic information, then estimate the target time period during which the data traffic is less than the first traffic threshold according to the data traffic model, and finally determine the target strategy among the preset energy-saving strategies according to the target time period.

It should be noted that the target strategy may include a channel off strategy, a digital IF channel sleep strategy, a channel power amplifier operating voltage optimizing strategy, and a channel power amplifier load matching optimizing strategy, etc., and the present disclosure is not limited thereto. In an example, the historical data traffic information is the statistical information about the data traffic from 0: 00 on July 6th, 2021 to 0: 00 on August 2nd, 2021. If the traffic from 23: 00 on each day to 5: 00 the next day during the period when historical data traffic is counted is less than the first traffic threshold, then the target strategy for the period from 23: 00 on each day to 5: 00 the next day for another subsequent couple of days is determined as the channel off strategy. As such, the operating channels of the AAU can be reduced in the target period, and all channels of the AAU work in other periods. Thereby, the power consumption is reduced and the energy saving is achieved. It should also be noted that the channel-off strategy can be a strategy of shutting down a quarter or more of the channels. The number of the shutdown channels can be set according to the practical situations and is not specifically limited, but at least 16 of the channels shall be kept operating.

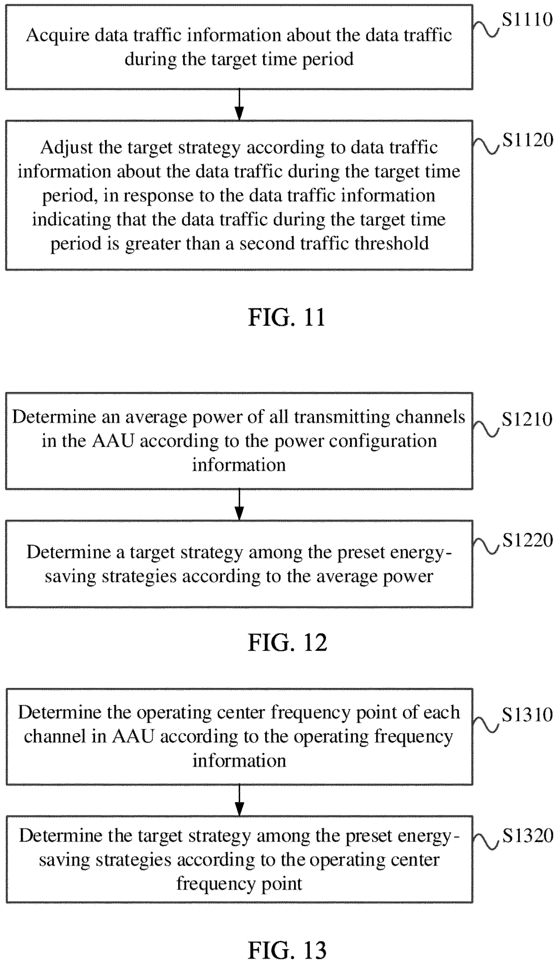

In an embodiment, as shown in FIG. 11, in the case where the network data status information includes historical data traffic information, operation S810 includes but is not limited to operations S1110, and S1120.

At operation S1110, data traffic information about the data traffic during the target time period is acquired.

In this operation, the network data status information includes historical data traffic information, and when the target strategy is to be determined, the data traffic information about the data traffic during the target time period can be obtained. As such, the target strategy can be adjusted according to the data traffic information of the target time period in the subsequent operations. The target strategy can be dynamically adjusted according to the data traffic information.

It should be noted that the data traffic information can be the data traffic information of the current moment or the data traffic information of a future period during which a target strategy is in effect, and the present disclosure is not limited thereto. In an example, the current time is 22: 00 on October 1, 2021 and the target time period can be from 23: 00 on October 1, 2021 to 5: 00 on October 2, 2021. Then, the data traffic information can be the statistical information about the data traffic of a period from 23: 00 on September 30, 2021 to 5: 00 on October 1, 2021, or of a period at 22: 50 on October 1, 2021.

At operation S1120, the target strategy is adjusted according to data traffic information about the data traffic during the target time period, in response to the data traffic information indicating that the data traffic during the target time period is greater than a second traffic threshold.

In this operation, since the data traffic information indicating the data traffic during the target time period is obtained in the previous operation S1110, the data traffic information can be compared with the second traffic threshold. When the data traffic information of the target time period is greater than the second traffic threshold, the target strategy is adjusted according to the data traffic information of the target time period, such that in the subsequent operation, an energy-saving control instruction can be acquired according to the target strategy, which is beneficial to adaptively handle the sudden and significant increase in data traffic in the target time period.

In an embodiment, the second traffic threshold is 2/3 of the full capacity ofAAU or other traffic values, which can be set according to the practical demand and is not specifically limited here.

In this embodiment, according to the operations S1110 and S1120 described above, the device for controlling energy-saving can first obtain the data traffic information of the target time period, and when the data traffic information of the target time period is greater than the second traffic threshold, the target strategy can be adjusted according to the data traffic information of the target time period, which is beneficial to adaptively handling the sudden and significant increase in data traffic of the target time period.

It should be noted that the target strategy may include a channel off strategy, a transmitting channel on strategy, a digital IF channel sleep strategy, a channel power amplifier operating voltage optimizing strategy, and a channel power amplifier load matching optimizing strategy, etc., and the present disclosure is not limited thereto. In an example, the current time is 23: 00 on August 3, 2021 and the historical data traffic information is the statistical information about the data traffic from 23: 00 on August 2, 2021 to 5: 00 on August 3, 2021. If the traffic at each moment from 23: 00 on August 2, 2021 to 5: 00 on August 3, 2021 is less than the first traffic threshold, then the target strategy for the period from 23: 00 on August 3rd, 2021 to 5: 00 on August 4th, 2021 is determined to be the channel off strategy. At the current time, the data traffic information at 22:00 on August 3, 2021 is obtained. If the data traffic information indicates the traffic greater than the second traffic threshold, the target strategy is adjusted to be the channel on strategy according to the data traffic information during the target time period, such that AAU starts the channel off strategy when confirming that the data service demand during the target time period is low, and therefore fewer operating channels are enabled, thereby reducing power consumption. When it is confirmed that the data service demand in the target time period is high, priority should be given to maintaining the operating channel (or activating more channels) to meet the data service demand.

In an embodiment, as shown in FIG. 12, in the case where the network data status information includes power configuration information of the AAU, operation S810 includes but is not limited to operations S1210, and S1220.

At operation S1210, an average power of all transmitting channels in the AAU is determined according to the power configuration information.

In this operation, in case the network data status information includes the power configuration information of the AAU, and when the target strategy is to be determined, the average power of all transmitting channels of the AAU can be determined according to the power configuration information. As such, in the subsequent operations, the target strategy can be determined among the preset energy-saving strategies by means of the average power. In this operation, the average power of all transmitting channels in the AAU can be dynamically determined, so as to determine the target strategy timely according to the average power.

It should be noted that the power configuration information may be the sum of the power of all carrier configurations of AAU.

At operation S1220, a target strategy is determined among the preset energy-saving strategies according to the average power.

In this operation, since the average power of all transmitting channels of the AAU is obtained in the previous operation S1210, the target strategy can be determined among the preset energy-saving strategies according to the average power. As such, the energy-saving control instruction can be obtained in the subsequent operations according to the target strategy, which is beneficial to realize the better operating state of the power amplifier of all transmitting channels according to the target strategy, and further reduce the power consumption.

In this embodiment, according to the operations S1210 and S 1220 as described above, the device for controlling energy-saving can first determine the average power of all transmitting channels of the AAU according to the power configuration information, and then determine the target strategy among the preset energy-saving strategies according to the average power, which is beneficial to the better efficiency of power amplifiers of all transmitting channels under the optimized operating voltage. Thereby the power consumption is reduced, and the AI-based optimization and energy saving of power amplifier voltage are achieved.

It should be noted that the target strategy may include the optimizing strategy of channel power amplifier operating voltage, the optimizing strategy of channel power amplifier load matching and other strategies. The optimizing strategy of channel power amplifier operating voltage includes the optimizing strategy of transmitting channel power device power amplifier average operating voltage. The optimizing strategy of channel power amplifier load matching includes the optimizing strategy of transmitting channel power device power amplifier average load matching, and the present disclosure is not limited thereto. For example, the sum of the power of all cell configurations of the AAU is obtained, the average power of all transmitting channels of the AAU is determined according to the sum of power of AAU configuration. Then the optimizing target values of the operating voltages of power amplifiers of all transmitting channels are determined in a preset energy-saving strategy according to the average power. It should also be noted that the optimizing target value may include the optimizing target value of the drain voltage of the power amplifier, the optimizing target value of the gate voltage of the power amplifier, and so on.

In an embodiment, as shown in FIG. 13, in the case where the network data status information includes operating frequency information of the AAU, operation S810 includes but is not limited to operations S1310, and S1320.

At operation S1310, the operating center frequency point of each channel in AAU is determined according to the operating frequency information.

In this operation, the network data status information includes the operating frequency information of AAU, and when the target strategy is to be determined, the operating center frequency point of each channel in AAU can be determined according to the obtained operating frequency information. As such, in the subsequent operations, the target strategy can be determined among the preset energy-saving strategies by means of the operating center frequency points.

It should be noted that the operating frequency information may be the operating frequency configured in the sector where AAU is located or other operating frequency information, and the present disclosure is not limited thereto.

At operation S1320, the target strategy is determined among the preset energy-saving strategies according to the operating center frequency point.

In this operation, the target strategy can be determined among the preset energy-saving strategies according to the operating center frequency point of each channel in the AAU obtained in the previous operation S1310. As such, the energy-saving control instruction can be obtained in the subsequent operations according to the target strategy.

In this embodiment, according to the operations S1310 and S1320 as described above, the device for controlling energy-saving can first determine the operating center frequency point of each channel of the AAU according to the operating frequency information, and then determine the target strategy among the preset energy-saving strategies according to the operating center frequency point, which is beneficial to the better efficiency of power amplifiers of all channels under the optimized load matching. Thereby the power consumption is reduced and the AI-based optimization and energy saving of power amplifier load matching are achieved.

It should be noted that this embodiment can be implemented independently from the above embodiments or in combination with the above embodiment, so as to realize one or more energy saving combinations.

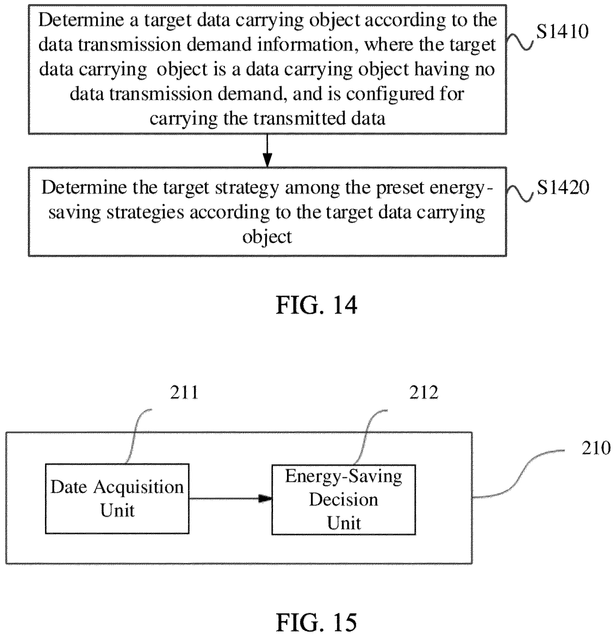

In an embodiment, as shown in FIG. 14, in the case where the network data status information includes data transmission demand information, operation S810 includes but is not limited to operations S1410, and S1420.

At operation S1410, a target data carrying object is determined according to the data transmission demand information. The target data carrying object is a data carrying object having no data transmission demand, and is for carrying the transmitted data.

In this operation, the network data status information includes data transmission demand information, and when the target strategy is to be determined, the target data carrying object can be determined according to the data transmission demand information, such that the target strategy can be determined among the preset energy-saving strategies by means of the target data carrying object in the subsequent operations.

In an embodiment, the target data carrying object is a data carrying object having no data transmission demand, and is for carrying the transmitted data.

It should also be noted that the data transmission demand information may be the data transmission demand of all carriers of AAU, the data transmission demand of all symbols of AAU, or the data transmission demand of all time slots ofAAU, etc., and the present disclosure is not limited thereto.

It should also be noted that the carrying object may include carriers, symbols, time slots, etc., and the present disclosure is not limited thereto.

At operation S1420, the target strategy is determined among the preset energy-saving strategies according to the target data carrying object.

In this operation, the target strategy can be determined in the preset energy-saving strategies according to the target data carrying object obtained in the previous operation S1410. Thus, in the subsequent operations the energy-saving control instruction can be acquired according to the target strategy.

It should be noted that the target strategy may include digital IF channel sleep strategy, channel off strategy at a corresponding time point, channel on strategy at corresponding time point, etc., and the present disclosure is not limited thereto.

In this embodiment, according to the operations S1410 and S1420 described above, the device for controlling energy-saving can first determine the target data carrying object according to the data transmission demand information, and then determine the target strategy among the preset energy-saving strategies according to the target data carrying object.

In an embodiment, the carrying object is a carrier. Data transmission demands of all carriers of AAU are obtained. The target data carrying object is determined to be a carrier having no data transmission demand according to the data transmission demand of all carriers of the AAU. Then the target strategy is determined among the preset energy-saving strategies according to the number of carriers having no data transmission demand. If the number of carriers having no data transmission demand is less than the AAU carrier number threshold and is greater than 0, then the target strategy can be determined as the digital IF channel sleep strategy among the preset energy-saving strategies. Thus, the reduction in the power consumption of the digital channel corresponding to the carrier having no data transmission demands is achieved, and then the AI-based turning off of the carrier is achieved to save energy.

In another embodiment, the carrying object is a time slot or a symbol. The data transmission demands of the current time slots or symbols are obtained first. The target data carrying object is determined to be a time slot or a symbol having no data transmission demand according to the data transmission demands of the current time slots or symbols. Then the time point at which the time slot or symbol can be turned off is determined according to the time slot or symbol having no data transmission demand. The target strategy is determined to be a channel turn-off strategy at the corresponding time point among the preset energy-saving strategies. Thus, the reduction in the power consumption of the transmitting circuit during a period of the time slot or symbol having no data transmission demands is achieved, and then the Al-based turning off of the time slot or symbol is achieved to save energy.

FIG. 15 depicts a schematic diagram showing a device 210 for controlling energy-saving according to an embodiment of the present disclosure. The device 210 includes a data acquisition unit 211 and an energy-saving decision unit 212. The data acquisition unit 211 is configured to obtain the network data status information. The energy-saving decision unit 212 is configured to perform energy-saving decision processing based on the network data status information and the preset energy-saving strategy to obtain the energy-saving control instruction, and to utilize the energy-saving control instruction to adjust the operating mode of AAU 110. That is, in contrast to the energy-saving mode in which the power supply is turned off regularly, and some channels are shut down regularly for energy-saving in the related art, according to an embodiment of the present disclosure, the energy-saving control instruction adapted to the current situation is acquired based on the currently acquired network data status information, such that the operating mode of the AAU can be adjusted according to the currently acquired network data status information for energy-saving. Therefore, the scheme according to an embodiment of the present disclosure can reduce equipment operation energy consumption, and reduce the impact on service experience without adding new hardware equipment. In an embodiment, the data acquisition unit 211 is arranged in any one of the network management system 130, BBU 120 or AAU 110. The energy-saving decision unit 212 is arranged in any one of the network management system 130, BBU 120 or AAU 110. The data acquisition unit 211 and the energy-saving decision unit 212 are flexibly deployed in the network management system 130, BBU 120 or AAU 110. The energy-saving decision unit 212 and the data acquisition unit 211 are flexibly and conveniently adjusted according to practical application demands to adapt to the diversity of AI-based energy-saving requirements of AAU 110.

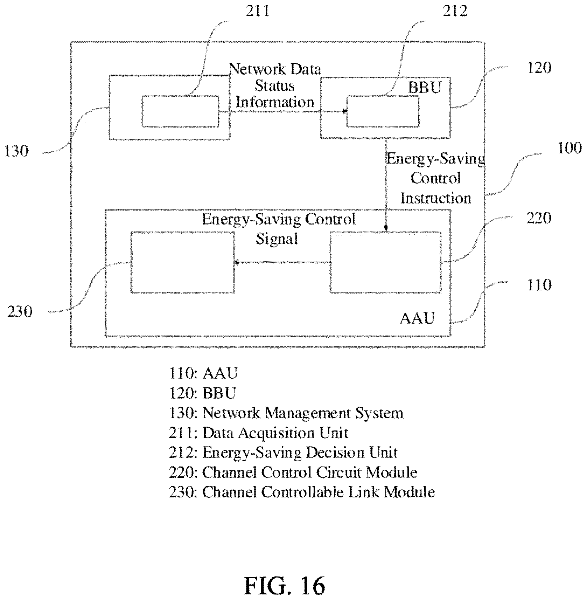

In an embodiment, as shown in FIG. 16, the data acquisition unit 211 is arranged in the network management system 130, and the energy-saving decision unit 212 is arranged in the BBU 120. In a case where the network data status information includes the historical data traffic information, the data acquisition unit 211 can acquire historical data traffic information from the network management system 130. The network management system 130 sends the historical data traffic information to the BBU 120. The energy-saving decision unit 212 in BBU 120 performs energy-saving decision processing according to the received network data status information and the preset energy-saving strategy to obtain an energy-saving control instruction. BBU 120 sends the energy-saving control instruction to the channel control circuit module 220 of AAUL 10. Thus, the channel control circuit module 220 generates a corresponding energy-saving control signal according to the energy-saving control instruction and sends the energy-saving control signal to the channel controllable link module 230 of AAUL 10. As such, the channel controllable link module 230 adjusts the operating mode of AAU 110 according to the energy-saving control signal.

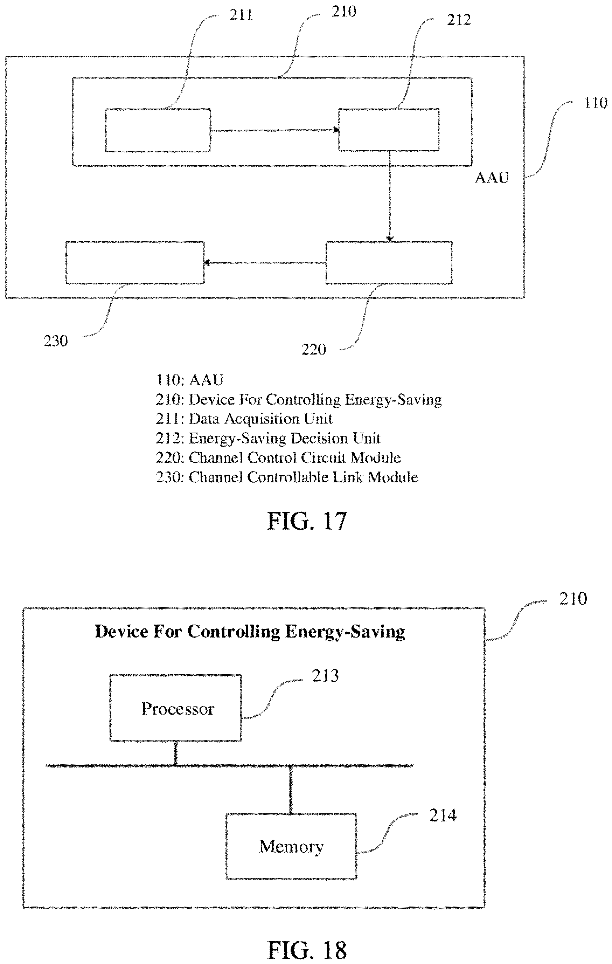

In an embodiment, as shown in FIG. 17, the data acquisition unit 211 and the energy-saving decision unit 212 are arranged in the AAU 110. The data acquisition unit 211 can acquire the power configuration information, the operating frequency information or the data transmission demand information of the AAU 110 in a case where the network data status information includes the power configuration information, the operating frequency information or the data transmission demand information of the AAU 110. The energy-saving decision unit 212 determines and performs energy-saving decision processing according to the obtained network data status information and the preset energy-saving strategy to obtain an energy-saving control instruction, and sends the energy-saving control instruction to the channel control circuit module 220 of the AAU 110. Thus, the channel control circuit module 220 generates a corresponding energy-saving control signal according to the energy-saving control instruction and sends the energy-saving control signal to the channel controllable link module 230. As such, the channel controllable link module 230 adjusts the operating mode of the AAU 110 according to the energy-saving control signal.

According to an embodiment of the present disclosure, a device 210 for controlling energy-saving is provided. As shown in FIG. 18, the device 210 includes but is not limited to:
a memory 214 configured to store a program; and
a processor 312 configured to execute the program stored in the memory 214, where when the processor 312 executes the computer program stored in the memory 214, the processor 312 is caused to perform any one of the methods for controlling energy-saving described above.

The processor 312 and the memory 214 may be connected by a bus or other means.

The memory 214, as a non-transient computer-readable storage medium, can be configured to store non-transitory software programs and non-transitory computer-executable programs, such as the method for controlling energy-saving as described in any one of the embodiments above in the present disclosure. The processor 312 executes the non-transitory software programs and instructions stored in the memory 214, such that the method for controlling energy-saving as described in any one of the embodiments above is carried out.

The memory 214 may include a program storage section and a data storage section, in which the program storage section may store an operating system and application programs for performing at least one operation, and data storage section may store program of the method for controlling energy-saving as described in any one of the embodiments above. In addition, the memory 214 can include high-speed random-access memory and non-transitory memory, such as at least one disk memory device, flash memory device, or other non-transitory solid-state memory devices. In some implementations, the memory 214 may include memories remotely located relative to the processor 312, and these remote memories may be connected to the processor 312 through a network. Examples of the above networks include, but are not limited to, the Internet, intranet, local area network, mobile communication network, and combinations thereof.

Non-transitory software programs and instructions of the method for controlling energy-saving described in the above embodiments are stored in a memory 214 which, when executed by at least one processor 312, cause the processor 312 to carry out operations of the method for controlling energy-saving as described in any one of the embodiments above, for example, the above-described operations S710 to S730 described in conjunction with FIG. 7, S810 to S820 described in conjunction with FIG. 8, S910 to S930 described in conjunction with FIG. 9, S1010 to S1030 described in conjunction with FIG. 10, S1110 and S1120 described in conjunction with FIG. 11, S1210 and S1220 described in conjunction with FIG. 12, S1310 and S1320 described in conjunction with FIG. 13, or S1410 and S1420 described in conjunction with FIG. 14.

The above-described device embodiments or system embodiments are only illustrative, in which the units illustrated as separate components may or may not be physically separated, that is, they may be located in one place or distributed over several network units. Some or all of the modules can be selected according to the practical needs to achieve the purpose of this embodiment.

According to an embodiment, a computer-readable storage medium is provided. The computer-readable storage medium stores computer-executable instructions which, when executed by a processor or controller, for example, by a processor in the embodiment of the electronic device, causes the processor to carry out the operations of the method for controlling energy-saving as described in any one of the embodiments above, for example, the above-described operations S710 to S730 described in conjunction with FIG. 7, S810 to S820 described in conjunction with FIG. 8, S910 to S930 described in conjunction with FIG. 9, S1010 to S1030 described in conjunction with FIG. 10, S1110 and S1120 described in conjunction with FIG. 11, S1210 and S1220 described in conjunction with FIG. 12, S1310 and S1320 described in conjunction with FIG. 13, or S1410 and S1420 described in conjunction with FIG. 14.

According to an embodiment of the present disclosure, a computer program product is provided. The computer program product includes a computer program, or a computer instruction stored in a computer-readable storage medium. A processor of a computer device can read the computer program or computer instruction from the computer-readable storage medium. The computer program or computer instruction which, when executed by the processor, causes the computer device to carry out the operations of the method for controlling energy-saving as described in any one of the embodiments above, for example, the above-described operations S710 to S730 described in conjunction with FIG. 7, S810 to S820 described in conjunction with FIG. 8, S910 to S930 described in conjunction with FIG. 9, S1010 to S1030 described in conjunction with FIG. 10, S1110 and S1120 described in conjunction with FIG. 11, S1210 and S1220 described in conjunction with FIG. 12, S1310 and S1320 described in conjunction with FIG. 13, or S1410 and S1420 described in conjunction with FIG. 14.

According to an embodiment, a method is provided. The method includes, acquiring network data status information, performing energy saving decision processing according to the network data status information and the preset energy-saving strategy to acquire an energy-saving control instruction; and adjusting the operation mode of AAU by means of the energy-saving control instruction. According to an embodiment of the present disclosure, an energy-saving decision procession is performed according to the network data status information and the preset energy-saving strategy, to acquire an energy-saving control instruction. Then, the operating mode of the AAU is regulated by means of the energy-saving control instruction. That is, in contrast to the energy-saving mode in which the power supply is turned off regularly, and some channels are shut down regularly for energy-saving in the related art, according to an embodiment of the present disclosure, the energy-saving control instruction adapted to the current situation is acquired based on the currently acquired network data status information, such that the operating mode of the AAU can be adjusted according to the currently acquired network data status information for energy-saving. Therefore, the scheme according to an embodiment of the present disclosure can reduce equipment operation energy consumption, and reduce the impact on service experience without adding new hardware equipment.

It shall be appreciated by a person having ordinary skills in the art that all or some of the operations and systems disclosed above can be implemented as software, firmware, hardware, and their appropriate combinations. Some or all physical components can be implemented as software executed by a processor, such as a central processing unit, a digital signal processor or a microprocessor, or as hardware, or as an integrated circuit, such as an application-specific integrated circuit. Such software can be distributed on computer-readable media, which can include computer storage media (or non-transitory media) and communication media (or transitory media). As is well known to a person having ordinary skills in the art, the term computer storage medium includes volatile and nonvolatile, removable and non-removable medium implemented in any method or technology for storing information such as computer-readable instructions, data structures, program modules, or other data. Computer storage medium includes, but is not limited to, RAM, ROM, EEPROM, flash memory or other memory technologies, CD-ROM, digital versatile disks (DVD) or other optical disk storage, magnetic boxes, tapes, magnetic disk storage or other magnetic storage devices, or any other medium that can be configured to store desired information and accessible by a computer. Furthermore, it is well known to those having ordinary skills in the art that communication media usually contains computer-readable instructions, data structures, program modules or other data in modulated data signals such as carrier waves or other transmission mechanisms, and can include any information delivery media.

Described above is a description of several embodiments of the present disclosure, but the present disclosure is not limited to the above embodiments. Those having ordinary skills in the art can make various equivalent modifications or substitutions without departing the scope of the present disclosure, and these equivalent modifications or substitutions are within the scope defined by the claims of the present disclosure.

## Claims

1. A method for controlling energy-saving, applied to a device for controlling energy-saving, the method comprising:
acquiring network data status information;
performing energy-saving decision processing according to the network data status information and a preset energy-saving strategy, to acquire an energy-saving control instruction; and
adjusting an operating mode of an active antenna unit (AAU) by means of the energy-saving control instruction.

2. The method according to claim 1, wherein the preset energy-saving strategy is one of a plurality of preset energy-saving strategies, and performing energy-saving decision processing according to the network data status information and the preset energy-saving strategy to acquire the energy-saving control instruction comprises:
determining a target strategy among the plurality of preset energy-saving strategies according to the network data status information; and
acquiring the energy-saving control instruction according to the target strategy.

3. The method according to claim 1, wherein the preset energy-saving strategy is one of a plurality of preset energy-saving strategies, and performing energy-saving decision processing according to the network data status information and the preset energy-saving strategy to acquire the energy-saving control instruction comprises:
inputting the network data status information into an energy-saving decision model for decision processing, and acquiring a decision index corresponding to the network data status information;
determining a target strategy among the plurality of preset energy-saving strategies according to the decision index; and
acquiring the energy-saving control instruction according to the target strategy.

4. The method according to claim 2, wherein the network data status information comprises historical data traffic information; and determining the target strategy among the plurality of preset energy-saving strategies according to the network data status information comprises:
establishing a data traffic model according to the historical data traffic information;
estimating a target time period during which data traffic is less than a first traffic threshold according to the data traffic model; and
determining a target strategy among the plurality of preset energy-saving strategies according to the target time period.

5. The method according to claim 4, wherein determining the target strategy among the plurality of preset energy-saving strategies according to the network data status information further comprises:
acquiring data traffic information about the data traffic during the target time period; and
adjusting the target strategy according to data traffic information about the data traffic during the target time period, in response to the data traffic information indicating that the data traffic during the target time period is greater than a second traffic threshold.

6. The method according to claim 2, wherein the network data status information comprises power configuration information of the AAU; and determining the target strategy among the plurality of preset energy-saving strategies according to the network data status information comprises:
determining an average power of each channel in the AAU according to the power configuration information; and
determining the target strategy among the plurality of preset energy-saving strategies according to the average power.

7. The method according to claim 2, wherein the network data status information comprises operating frequency information of the AAU; and determining the target strategy among the plurality of preset energy-saving strategies according to the network data status information comprises:
determining an operating center frequency point of each transmitting channel in the AAU according to the operating frequency information; and
determining the target strategy among the plurality of preset energy-saving strategies according to the operating center frequency point of each transmitting channel.

8. The method according to claim 2, wherein the network data status information comprises data transmission demand information; and determining the target strategy among the plurality of preset energy-saving strategies according to the network data status information comprises:
determining a target data carrying object according to the data transmission demand information; wherein the target data carrying object is a data carrying object having no data transmission demand, and is configured to carry transmitted data; and
determining the target strategy among the plurality of preset energy-saving strategies according to the target data carrying object.

9. The method according to claim 1, wherein acquiring the network data status information comprises:
acquiring the network data status information through a network management system or through the AAU.

10. A device for controlling energy-saving, comprising:
a data acquisition unit; and
an energy-saving decision unit; wherein
the data acquisition unit is configured to acquire network data state information;
the energy-saving decision unit is configured to perform energy-saving decision processing according to the network data state information and a preset energy-saving strategy to obtain an energy-saving control Antenna Unit (AAU); and
the data acquisition unit is arranged within one of a network management system, a Base Band Unit (BBU), or the AAU, and the energy-saving judgment unit is arranged in one of the network management system, the BBU or the AAU.

11. A device for controlling energy-saving, comprising a memory, a processor, and a computer program stored in the memory and executable by the processor which, when executed by the processor causes the processor to carry out the method according to any one of claims 1 to 9.

12. A computer-readable storage medium storing a computer-executable instruction which, when executed by a processor, causes the processor to carry out the method as claimed in any one of claims 1 to 9.

13. A computer program product, comprising a computer program or a computer instruction stored in a computer-readable storage medium which, when executed by a processor of a computer device, causes the computer device to carry out the method according to any one of claims 1 to 9.
